Europäisches Patentamt

European Patent Office

Office européen des brevets

(11) Veröffentlichungsnummer: **0 505 919 B1**

## (12) EUROPÄISCHE PATENTSCHRIFT

(45) Veröffentlichungstag der Patentschrift: **28.06.95**

(21) Anmeldenummer: **92104749.4**

(22) Anmeldetag: **19.03.92**

(51) Int. Cl.[6]: **F16H 7/02**, F16H 55/17, F16G 1/28

Die Akte enthält technische Angaben, die nach dem Eingang der Anmeldung eingereicht wurden und die nicht in dieser Patentschrift enthalten sind.

(54) **Zahnriementrieb.**

(30) Priorität: **26.03.91 DE 4109825**

(43) Veröffentlichungstag der Anmeldung:
**30.09.92 Patentblatt 92/40**

(45) Bekanntmachung des Hinweises auf die Patenterteilung:
**28.06.95 Patentblatt 95/26**

(84) Benannte Vertragsstaaten:
**DE ES FR GB IT SE**

(56) Entgegenhaltungen:
EP-A- 0 106 694    EP-A- 0 148 645
EP-A- 0 368 099    EP-A- 0 384 049
WO-A-86/02982    DE-B- 1 077 938
DE-C- 3 047 716    DE-U- 9 101 867
GB-A- 2 209 815    US-A- 3 404 576
US-A- 4 295 837

(73) Patentinhaber: **Continental Aktiengesellschaft**
**Vahrenwalder Strasse 9**
**D-30165 Hannover (DE)**

(72) Erfinder: **Berger, Ralf**
**Helwingerodestrasse 23**
**W-3000 Hannover 71 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf einen Zahnriementrieb bestehend aus einem Zahnriemen mit einer Vielzahl von Riemenzähnen und Zahnrädern mit einer Vielzahl von zwischen je zwei Radzähnen befindlichen Zahnlücken, wobei jeder Riemenzahn dazu bestimmt ist, in eine Radzahnlücke einzugreifen und wobei das Profil der Riemenzähne nicht konjugiert ist zum Profil der Zahnlücken der Zahnräder. Solch ein Zahnriementrieb ist bekannt aus WO-A-86/02982.

Die Aussage, daß das Profil der Riemenzähne nicht konjugiert ist zum Profil der Zahnlücken der Zahnräder, ist äquivalent zu der Aussage, daß das Profil der Zahnlücken der Zahnräder nicht konjugiert ist zum Profil der Riemenzähne. Wird ein Fräser, dessen Drehachse in Umfangsrichtung des zu fräsenden Zahnrades weist, mit dem Zahnriemenprofil gegen den zunächst zylinderförmigen Rohling zugestellt, so ergibt sich unter Abwälzen des Rohlinges auf diesem die konjugierte Zahnlückenform. Der Begriff "konjugiert" ist damit eindeutig definiert.

Die zueinander konjugierte Formgebung von Riemen und Zahnrad wurde bislang üblicherweise als Voraussetzung von befriedigendem Gleichlauf angesehen, wenngleich die genannte WO-A-86/02982 mit dieser Vorstellung anscheinend erstmalig gebrochen hat. Es stellt sich die Aufgabe, durch eine besonders geschickte Zuordnung nichtkonjugierter Verzahnungsformen an Riemen und Rad ohne Verringerung der Leistungsdichte die Zahnriementriebe noch leiser zu gestalten.

Prinzipiell kann die nicht-konjugierte Zuordnung durch Änderungen am Riemen oder am Zahnrad oder an beiden Elementen erreicht werden.

Ausgehend von den gattungsgemäßen Merkmalen wird die Aufgabe erfindungsgemäß dadurch gelöst, daß die Mittelpunkte der die Radflanken definierenden Kreisbögen um 20 % bis 28 % des Teilungsmaßes radial außerhalb des Zahnradkopfkreises liegen.

Überraschender Weise wiegt der durch die Erfindung erreichte besonders weiche Einlauf der Riemenzähne in die wesentlich steiferen Zahnradlücken den zu erwartenden Nachteil der ungleichförmigeren Kinematik mehr als auf. Die Geräuschabstrahlung ist vermindert.

Vorzugsweise werden die Riemenfußbögen (14) und die Riemenkopfbögen (10) so bemessen und zueinander gestellt, daß die links und rechts einer Riemenzahnmittellinie (y) sich ergebenden, die Riemenflanken definierenden Geradenabschnitte (8) einen Flankenwinkel zwischen 14° und 17° einschließen. Mit einem Differenzwinkel zur Radialen bei symmetrischer Zahngestaltung von nur 7° bis 8,5° ist die nach radial außen gerichtete Komponente der an den Flanken übertragenen Normalkräfte drastisch gegenüber dem Stand der Technik reduziert, sodaß diese Riemen trotz besonders weichen Einlaufes mit einer verringerten Vorspannung auskommen.

Gemäß Anspruch 1 bestehen die Flanken der Radzähne in an sich bekannter Weise aus je einem Kreisbogen, dessen Mittelpunkt jenseits der Mittellinie der jeweiligen Radzahnlücke liegt, wobei die Mittelpunkte der die Radflanken definierenden Kreisbögen radial außerhalb des Zahnradkopfkreises liegen und zwar vorzugsweise um 20 % bis 28 % des Teilungsmaßes. Hierdurch wird eine Überlastung der Riemenzahnfüße besonders effektiv vermieden.

Zur leichteren Einführung der Erfindung ist eine solche Gestaltung des Zahnrades möglich, bei der - abweichend vom oben angegebenen Optimum - die Mittelpunkte der die Radflanken definierenden Kreisbögen exakt auf dem Zahnradkopfkreis liegen, bei ansonsten gleicher Ausführung; auf diese Weise kann auf das Verzahnungsprofil des Zahnrades entsprechend der EP-PS 0 106 694 zurückgegriffen werden. Die hiermit erreichten Ergebnisse sind im Zusammenwirken mit dem nachfolgend beschriebenen Verzahnungsprofil des Zahnriemens immer noch günstiger als die nach dem Stand der Technik.

Das bevorzugte Verzahnungsprofil des Zahnriemens ist dadurch gekennzeichnet, daß die Flanken der Riemenzähne im wesentlichen aus einem Geradenabschnitt bestehen. Diese Zahnriemen gemäß Anspruch 4 empfehlen sich insbesondere zur Paarung mit den erfindungsgemäßen, im Anspruch 1 beschriebenen Zahnrädern, deren Flankenkrümmungspole um 20 % bis 28 % radial außerhalb des Zahnradkopfkreises liegen. Wie im Abschnitt zuvor beschrieben ist allerdings selbst eine Kombination mit Zahnrädern, bei der die Mittelpunkte der die Radflanken definierenden Flanken nach Anspruch 3 auf dem Zahnradkopfkreis liegen, noch gegenüber dem Stand der Technik vorteilhaft.

Vorzugsweise sind die zuvor erwähnten Geradenabschnitte der Zahnriemenflanken in der Weise bemessen, daß sie sich von einer Untergrenze zwischen 14 % und 20 % der maximalen Riemenzahnkopfhöhe bis zu einer Obergrenze zwischen 46 % und 56 % der maximalen Riemenzahnkopfhöhe erstrecken. Dabei sind alle Maßangaben von der Riemenzahnfußlinie aus gemessen.

Im Zusammenhang mit den geraden Zahnriemenflanken und den dazu unkonjugierten, kreissektorförmigen Zahnradflanken, haben sich überraschend plumpe Zahnriemenköpfe bewährt. Vorzugsweise sind die Riemenzahnköpfe in der Weise gestaltet, daß sich an die Geradenabschnitte der Flanken Kreisbögen anschließen mit einem Radius zwischen 60 % und 70 % der maximalen Riemenzahnkopfhöhe. Zwischen diesen beiden Kreisbögen soll sich ein kurzer Geradenabschnitt befinden, der in die Riemenlängsrichtung weist.

Nachdem der entscheidende Lösungsgedanke gefunden war, daß nämlich die beiden zusammenwirkenden Verzahnungsgeometrien von Riemen und Rad gezielt "verstimmt" werden, war noch offen, an welchem der Einzelelemente besonders effektiv eingegriffen werden kann, um die beabsichtigte Verstimmung zu realisieren. Infolge der höheren Werkstofffestigkeit des Zahnrades, besteht bei dessen Gestaltung eine größere konstruktive Freiheit; also kam als erstes eine Zahnradänderung in Betracht. Von der mächtigsten Kundenseite her, der Automobilindustrie für den Anwendungsfall des Nockenwellenantriebes, besteht aber die rigorose Forderung zur Beschränkung auf höchstens zwei verschiedene, vorzugsweise ein einziges Zahnradprofil für sämtliche Typen. Aus diesem Markterfordernis entstand das ungewohnte Zahnriemenprofil, in dem die Flanken im wesentlichen aus einem Geradenabschnitt bestehen und die Kopfkreisbögen von großem Radius sind, wobei die Geradenabschnitte der Flanken der Riemenzähne sich von einer Untergrenze zwischen 14 % und 20 % der maximalen Riemenzahnkopfhöhe bis zu einer Obergrenze zwischen 46 % und 56 % der maximalen Riemenzahnkopfhöhe erstrecken, jeweils von der Riemenzahnfußlinie aus gesehen und wobei die Köpfe der Riemenzähne im Profil durch je einen an die Geradenabschnitte der Flanken anschließenden Kreisbogen mit einem Radius zwischen 60 % und 70 % der maxiamalen Riemenzahnkopfhöhe und einen dazwischen liegenden weiteren, in Umfangsrichtung verlaufenden Geradenausschnitt gebildet sind.

Die Erfindung wird nachfolgend anhand von fünf Figuren näher erläutert. Es zeigt:

Fig. 1  eine bevorzugte Ausführung eines erfindungsgemäßen Zahnriemenprofiles,

Fig. 2  ein an sich bekanntes Zahnradprofil, bei dem die Krümmungsmittelpunkte der Flanken auf dem Kopfkreis liegen,

Fig. 3  den Einlauf eines Zahnriemens gemäß Figur 1 in ein Zahnrad gemäß Figur 2,

Fig. 4  ein erfindungsgemäßes Zahnradprofil, bei dem die Krümmungsmittelpunkte der Flanken radial außerhalb des Kopfkreises liegen, und

Fig. 5  den Einlauf eines Zahnriemens gemäß Figur 1 in ein Zahnrad gemäß Figur 4.

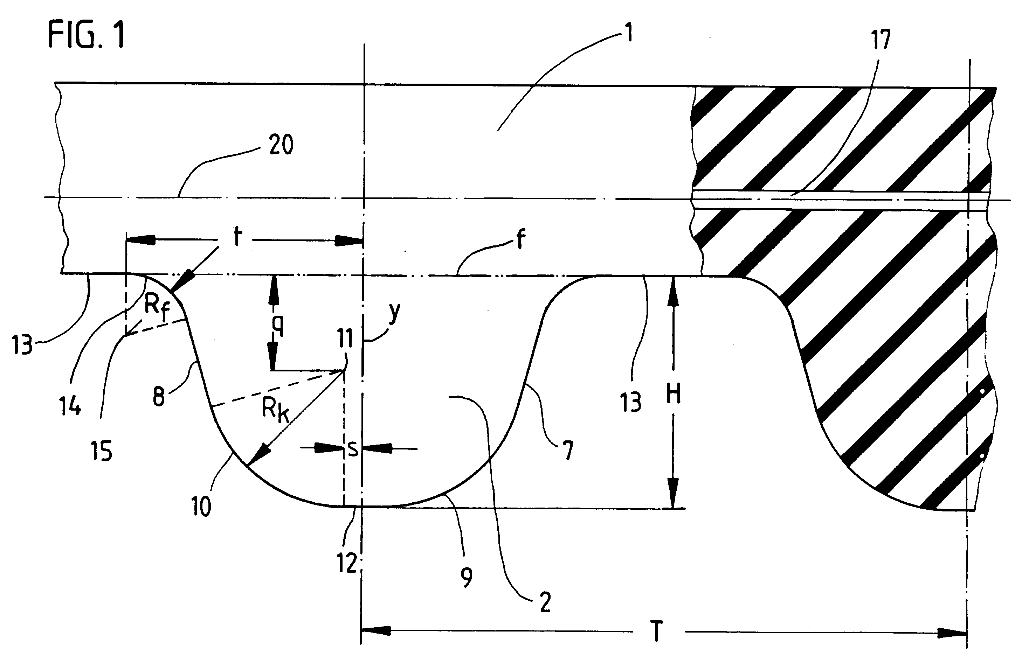

Die Figur 1 zeigt in gestreckter Stellung ein erfindungsgemäßes Zahnriemenprofil bevorzugter Ausführung. Von dem Zahnriemen 1 mit seiner Vielzahl von Zähnen sind etwa eineinhalb Zähne 2 maßstabsgerecht gezeigt. Der Abbildungsmaßstab beträgt 50:1. Die Riementeilung T beträgt 3 mm.

Zwischen der Zahnriemenfußlinie f und den radial innersten Stellen der Riemenzahnköpfe 9 ist die Riemenzahnkopfhöhe H angetragen, die in diesem Beispiel 1,17 mm beträgt. Die Riemenzahnköpfe 9 werden im wesentlichen gebildet durch Kreisbogensektoren 10 . Deren Krümmungsmittelpunkte 11 sind um das Maß q radial innerhalb der Zahnfußlinie f und um das Maß s diesseitig gegenüber der Riemenmittellinie y gesetzt. - Mit dem Begriff "diesseitig" ist gemeint, daß sich Krümmungsmittelpunkt und Bogen auf der selben Seite der Riemenmittellinie befinden; mit dem Begriff "jenseits" wird das Gegenteil ausgedrückt, wie dies bei den später behandelten Radflankenbögen der Fall ist. - In diesem Ausführungsbeispiel gilt $q = 0,48$ mm und $s = 0,95$ mm. Zwischen den beiden Kreisbögen 10 eines jeden Riemenzahnkopfes 9 befindet sich ein kleiner, in Umfangsrichtung verlaufender Geradenausschnitt 12.

Die Riemenstege 13, die im Eingriff mit dem Zahnrad dazu vorgesehen sind, auf den Radzahnköpfen aufzuliegen, sind in an sich bekannter Weise geradlinig ausgebildet. Die Riemenstege 13 liegen definitionsgemäß auf der Zahnriemenfußlinie f, die hier als Strichdoppelpunktlinie gezeigt ist.

Der Übergang vom Riemensteg 13 zur Riemenflanke 7 ist in an sich bekannter Weise durch einen tangential anschließenden Riemenfußbogen 14 geschaffen. Er (14) weist in diesem Ausführungsbeispiel einen Radius $R_f$ von 0,31 mm auf. Der Krümmungsmittelpunkt 15 des Riemenfußbogens 14 liegt im Abstand t zur Riemenzahnmittellinie y; dieser Abstand t beträgt in diesem Beispiel 1,18 mm.

Von besonderer Bedeutung für die Erfindung ist die gerade Ausbildung der den wesentlichen Anteil des Drehmomentes übertragenden Riemenflanke 7. Wegen des geforderten tangentialen Überganges der Riemenflanke 7 sowohl zum Riemenfußbogen 14 als auch zum Riemenkopfbogen 10 hin, ist der die Riemenflanke 7 definierende Geradenabschnitt 8 durch Bestimmung beider Bögen 10 und 14 eindeutig festgelegt.

Der Flankenwinkel $\alpha$ beträgt im gezeigten Beispiel 15,5° und entspricht damit genau dem Wert, der sich bei nichtkonjugierter Ausbildung der beiden zusammmenwirkenden Verzahnungsprofile als optimal erwiesen hat. In ihrem jeweiligen Druckmittelpunkt unter Nennlast weisen die im Stand der Technik bekannten Verzahnungsprofile demgegenüber Flankenwinkel zwischen 19° und 25° auf. Da sich die Radialkraftkomponente $F_r$, die von der Umfangskraft $F_u$ induziert wird, einstellt zu

$$F_r = F_u \times \tan\left(\frac{\alpha}{2}\right),$$

ist mit der vorliegenden Erfindung neben dem weicheren Ein- und Auslauf der Riemenzähne auch eine erhebliche Verminderung der Radialkraftkomponente verbunden. Hierdurch ist die erforderliche Riemenvorspannung und damit die umlaufende Blindleistung gesenkt.

Während der Riemen 1 am rechten Bildrand im Schnitt gezeigt ist, sodaß dort der Zugstrang 17 erkennbar ist, dessen Mitte die Teilungslinie 20 definiert, ist er (1) links davon in Ansicht dargestellt.

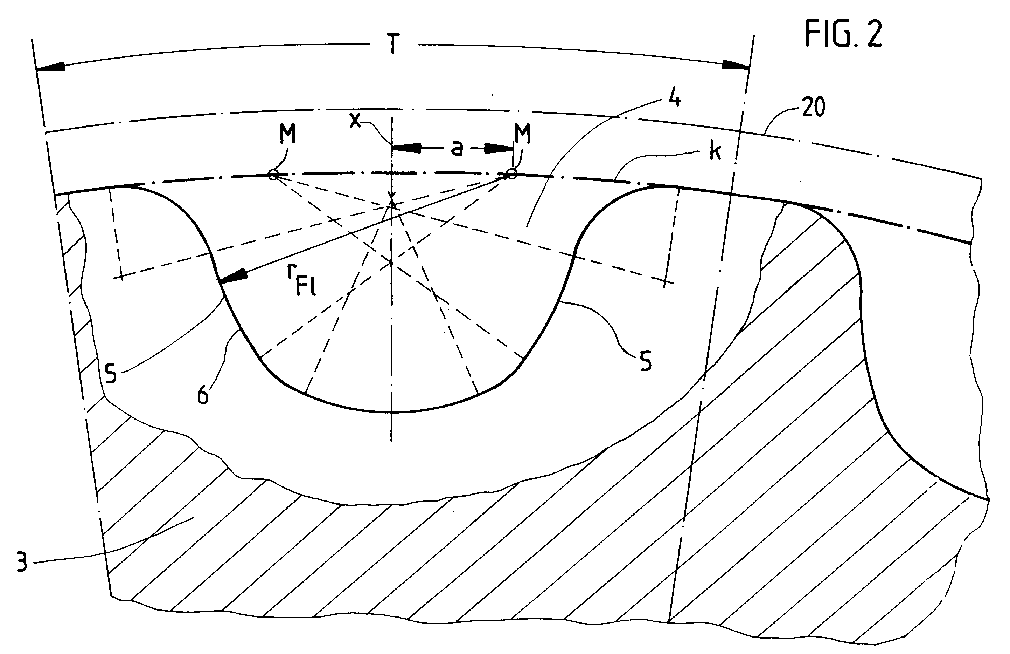

Die Figur 2 zeigt maßstabsgerecht ein an sich bekanntes Zahnradprofil, bei dem die Krümmungsmittelpunkte M der Flanken 5 jenseits der Lückenmittellinie x auf dem Kopfkreis k des Zahnrades 3 liegen. Diese Ausführung entspricht der EP-PS 0 106 694.

Das wichtigste Element der Zahnlücken 4 sind die Radflanken 5. Sie (5) weisen bei der - auf dem Teilkreis 20 zu messenden - gleichen Teilung T von 3 mm einen Radius $r_{F1}$ von etwa 1,6 mm auf. Die Krümmungsmittelpunkte M der Radflanken 5 liegen jenseits der Lückenmittellinie x in einem Abstand a zu dieser von etwa 0,6 mm.

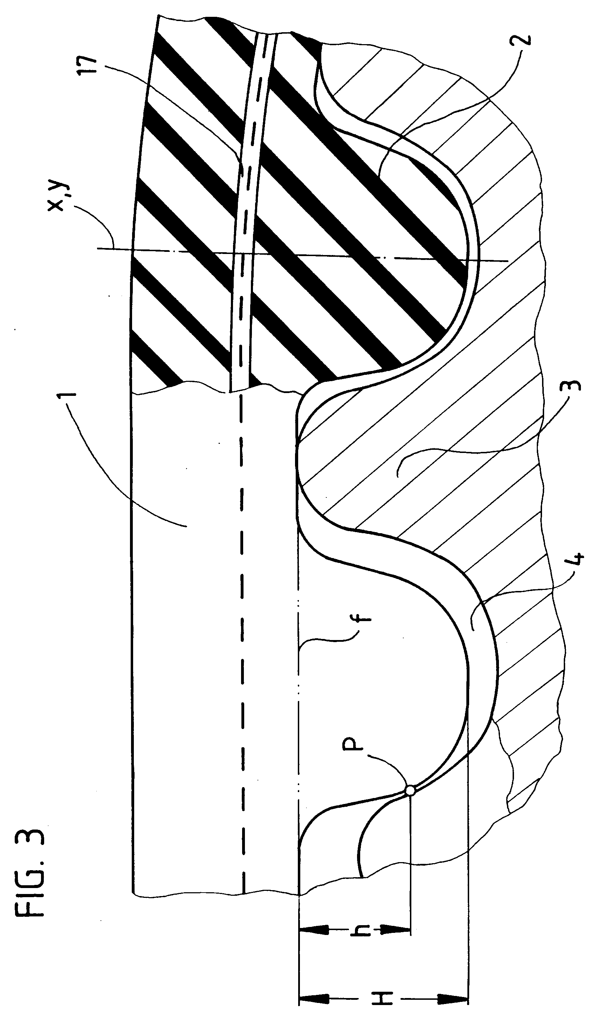

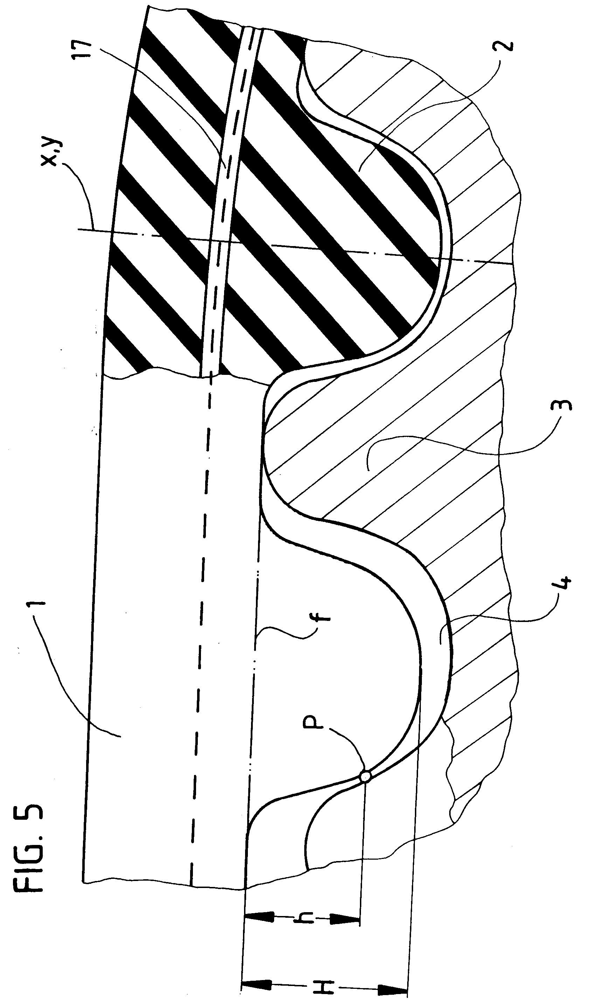

Die Figur 3 zeigt den Einlauf eines Zahnriemens 1 gemäß Figur 1 in ein Zahnrad 3 gemäß Figur 2. Aus zeichentechnischen Gründen ist die Relativlage beider Maschinenelemente 1, 3 von der Realität abweichend in der Weise dargestellt, daß nach vollem Eintauchen der Riemenzähne 2 in die Radzahnlücken 4 die Radlückenmittellinie x mit der Riemenzahnmittellinie y zusammenfällt. Hierdurch bleiben unbeschadet der Berührflächenausbildung die Konturen von Riemenverzahnung und Radverzahnung uneingeschränkt sichtbar. Die gleiche Darstellungstechnik ist in der später behandelten, analogen Figur 5 gewählt.

Wesentlich ist die vom Zugstrang 17 weit entfernte Lage des beim Einlauf ersten Berührpunktes P . Er (P) befindet sich gegenüber der Zahnriemenfußlinie f in einer radialen Höhe h von 0,83 mm, also 71 % der maximalen Riemenzahnkopfhöhe H von 1,17 mm.

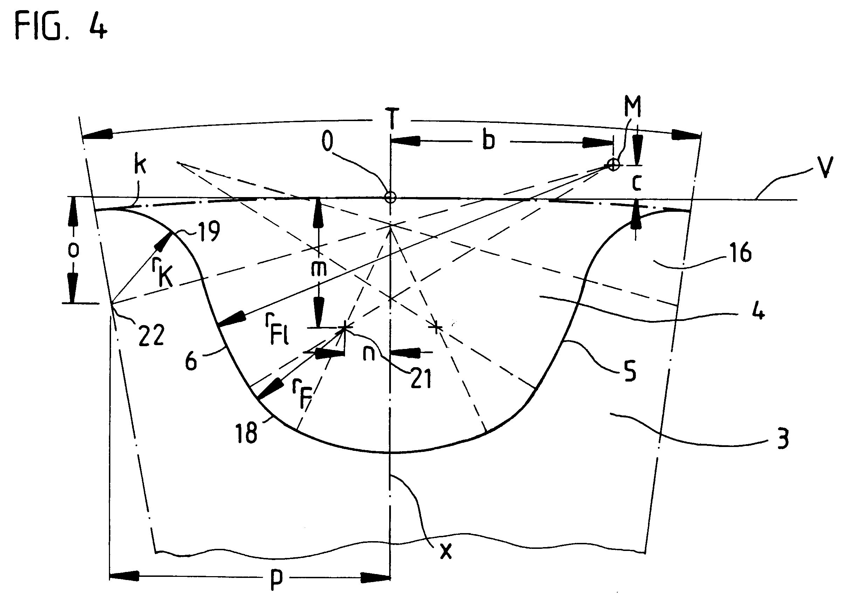

Die Figur 4 zeigt maßstabsgerecht ein bevorzugtes, neuartiges Zahnradprofil, bei dem die Krümmungsmittelpunkte M der die Radflanken 5 definierenden Kreisbögen 6 nach radial außen versetzt ist gegenüber dem Zahnradkopfkreis k. Die gezeigte Zahnlücke 4 gehört zu einem Zahnrad 3 mit 30 Zähnen. Zur Beschreibung aller Krümmungsmittelpunkte ist im Punkte O, dem Schnittpunkt der Zahnradlückenmittellinie x mit dem Zahnradkopfkreis k, eine Tangente V an den Zahnradkopfkreis errichtet. Ähnlich einem cartesischen Koordinatensystem werden als "radiale" Maße die Abstände zu dieser Tangente V angegeben und als Maße "in Umfangsrichtung" die Abstände zur Lückenmittellinie x.

Im Unterschied zur Radversion nach Figur 2 ist hier der Abstand des Flankenkrümmungsmittelpunktes M von der Radlückenmittellinie x mit b bezeichnet. Bei gleicher Teilung T = 3,000 mm beträgt dieses Maß 1,071 mm. Der Krümmungsmittelpunkt M liegt zur Tangente V in radialem Abstand c von 0,159 mm. Der Radius $r_{F1}$ der die Radflanken 5 im wesentlichen definierenden Kreisbögen 6 beträgt gemäß der hier gezeigten, bevorzugten Ausführung 2,080 mm.

Die Radzahnfußbögen 18 sind mit einem Radius $r_F$ von 0,561 mm um die Krümmungsmittelpunkte 21 ausgeführt. Der Mittelpunkt 21 liegt in radialem Abstand m zur Tangente V von 0,631 mm und in Umfangsrichtung zur Zahnlückenmittellinie x im Abstand n von 0,226 mm.

Die Radzahnkopfbögen 19 sind mit einem Radius $r_K$ von 0,455 mm um die Krümmungsmittelpunkte 22 ausgeführt. Deren radiales Maß o beträgt 0,525 mm und das Maß p in Umfangsrichtung 1,370 mm. Mit der Kontur der Radzahnlücken 4 sind die Radzähne 16 definiert.

Die Figur 5 zeigt den Einlauf eines Zahnriemens 1 gemäß Figur 1 in das bevorzugte Zahnrad 3 gemäß Figur 4. Abgesehen von dem anderen Zahnrad 3 entspricht diese Figur der Figur 3. Allerdings sind die Eingriffsverhältnisse noch etwas günstiger, weil die Zahnriemenfüße geringer belastet werden und der erste Berührpunkt P der Riemenflanken 7 mit den Radflanken 5 noch weiter vom Zugstrang 17 und der Riemenfußlinie f entfernt liegen; der Abstand zur Riemenfußlinie beträgt 0,89 mm, also 76 % der Riemenzahnkopfhöhe H von 1,17 mm.

Die bevorzugten Maße sind so präzise angegeben, weil die Laufeigenschaften von Zahnriementrieben empfindlich von der gewählten Verzahnungsgeometrie abhängig sind. Für Zahnradprofile anderer Teilungen sollen die angegebenen Maße proportional dem Teilungsmaß T bestimmt sein.

Kern der Erfindung ist die Lehre, unkonjugierte Verzahnungsprofile miteinander zu paaren. Die Unkonjugiertheit wird vorteilhafterweise dadurch erzielt, daß die Zahnriemenflanken gerade ausgeführt sind, während die Radflanken entweder in bekannter Weise oder bevorzugt in neuartiger Weise mit nach radial außen verlegtem Krümmungsmittelpunkt gestaltet sind. Diese von einer auf kinematischen Gleichlauf ausgelegten Verzahnungspaarung abweichende Lehre führt zu besonders weich einlaufenden Riemenzähnen mit stark progressiver Federkennlinie. Die Erfindung ermöglicht sowohl eine erhöhte Leistungsdichte als auch ein geringeres Laufgeräusch.

**Patentansprüche**

1. Zahnriementrieb bestehend aus einem Zahnriemen (1) mit einer Vielzahl von Riemenzähnen (2) und Zahnrädern (3) mit einer Vielzahl von zwischen je zwei Radzähnen (16) befindlichen Zahnlücken (4), wobei jeder Riemenzahn (2) dazu bestimmt ist, in eine Radzahnlücke (4) einzugreifen, wobei das Profil der Riemenzähne (2) nicht konjugiert ist zum Profil der Zahnlücken (4) der Zahnräder (3) **dadurch gekennzeichnet,** daß die Mittelpunkte (M) der die Radflanken (5) definierenden Kreisbögen (6) um 20 % bis 28 % des Teilungsmaßes (T) radial außerhalb des Zahnradkopfkreises (k) liegen.

2. Zahnriementrieb nach Anspruch 1 dadurch gekennzeichnet, daß das Profil der Riemenzähne (2) in der Weise vom konjugierten Profil der Zahnlücken (4) der Zahnräder (3) abweicht, daß jeder beim Riemeneinlauf in Eingriff geratende Riemenzahn (2) mit einem einzigen Berührungspunkt (P) auf die zugeordnete Flanke (5) eines Radzahnes (16) auftrifft, wobei der im Eingriffsbeginn sich auf der Riemenflanke (7) einstellende Berührpunkt (P) sich gegenüber der Zahnriemenfußlinie (f) in einer radialen Zahnhöhe (h) zwischen 69 % und 79 % der maximalen Riemenzahnkopfhöhe (H) befindet.

3. Zahnriementrieb nach Anspruch 1 dadurch gekennzeichnet, daß die Flanken (5) der Radzähne (16) aus Kreisbögen bestehen, deren Mittelpunkte (M) jenseits der Lückenmittellinie (x) auf dem Zahnradkopfkreis (k) liegen in an sich bekannter Weise gemäß EP-PS 0 106 694.

4. Zahnriementrieb nach Anspruch 1 dadurch gekennzeichnet, daß die Flanken (7) der Riemenzähne (2) im wesentlichen aus einem Geradenabschnitt (8) bestehen.

5. Zahnriementrieb nach Anspruch 4 dadurch gekennzeichnet, daß die beiden Flanken (7) eines Riemenzahnes (2) einen Flankenwinkel zwischen 14° und 17° einschließen.

6. Zahnriementrieb nach Anspruch 1 dadurch gekennzeichnet, daß zumindest einer seiner Zahnriemen (1) nach Anspruch 4 ausgebildet ist.

7. Zahnriementrieb nach Anspruch 4 dadurch gekennzeichnet, daß am Zahnriemen (1) die Geradenabschnitte (8) der Flanken (7) der Riemenzähne (2) sich von einer Untergrenze zwischen 14 % und 20 % der maximalen Riemenzahnkopfhöhe (H) bis zu einer Obergrenze zwischen 46 % und 56 % der maxiamalen Riemenzahnkopfhöhe (H) erstreckt, jeweils von der Riemenzahnfußlinie (f) aus gesehen.

8. Zahnriementrieb nach Anspruch 4 dadurch gekennzeichnet, daß die Köpfe (9) der Riemenzähne (2) im Profil durch je einen an die Geradenabschnitte (8) der Flanken (7) anschließenden Kreisbogen (10) mit einem Radius (R) zwischen 60 % und 70 % der maximalen Riemenzahnkopfhöhe (H) und einem dazwischenliegenden weiteren, in Umfangsrichtung verlaufenden Geradenabschnitt (11) gebildet sind.

9. Zahnriemen mit einer Vielzahl von Riemenzähnen (2), wobei die Flanken (7) der Riemenzähne (2) im wesentlichen aus einem Geradenabschnitt (8) bestehen, **dadurch gekennzeichnet,** daß die Geradenabschnitte (8) der Flanken (7) der Riemenzähne (2) sich von einer Untergrenze zwischen 14 % und 20 % der maximalen Riemenzahnkopfhöhe (H) bis zu einer Obergrenze zwischen 46 % und 56 % der maximalen Riemenzahnkopfhöhe (H) erstrecken, jeweils von der Riemenzahnfußlinie aus gesehen und, daß die Köpfe (9) der Riemenzähne (2) im Profil durch je einen an die Geradenabschnitte (8) der Flanken (7) anschließenden Kreisbogen (10) mit einem Radius (R) zwischen 60 % und 70 % der maximalen Riemenzahnkopfhöhe (H) und einen dazwischenliegenden weiteren, in Umfangsrichtung verlaufenden Geradenausschnitt (11) gebildet sind.

## Claims

1. Toothed belt drive, comprising a toothed belt (1) having a plurality of belt teeth (2) and toothed wheels (3) having a plurality of tooth gaps (4), which are situated between every two wheel teeth (16), each belt tooth (2) being intended to engage in a wheel tooth gap (4), the profile of the belt teeth (2) not being conjugated relative to the profile of the tooth gaps (4) of the toothed wheels (3), characterised in that the centres (M) of the arcs (6) defining the wheel tooth flanks (5) lie radially externally of the toothed wheel addendum circle (k) over 20 % to 28 % of the pitch dimension (T).

2. Toothed belt drive according to claim 1, characterised in that the profile of the belt teeth (2) deviates from the conjugated profile of the tooth gaps (4) of the toothed wheels (3) in such a manner that each belt tooth (2), which comes into engagement during the entry movement of the belt, encounters the associated flank (5) of a wheel tooth (16) with a single point of contact (P), the point of contact (P) being adjusted on the belt tooth flank (7) at the commencement of engagement and being situated opposite the toothed belt dedendum line (f) at a radial tooth height (h) of between 69 % and 79 % of the maximum belt tooth addendum (H).

3. Toothed belt drive according to claim 1, characterised in that the flanks (5) of the wheel teeth (16) comprise arcs, the centres (M) of which lie on the toothed wheel addendum circle (k) on the other side of the gap centre line (x) in a manner known per se in accordance with EP-PS 0 106 694.

4. Toothed belt drive according to claim 1, characterised in that the flanks (7) of the belt teeth (2) substantially comprise a straight portion (8).

5. Toothed belt drive according to claim 4, characterised in that the two flanks (7) of a belt tooth (2) form a flank angle of between 14° and 17°.

6. Toothed belt drive according to claim 1, characterised in that at least one of its toothed belts (1) is constructed in accordance with claim 4.

7. Toothed belt drive according to claim 4, characterised in that the straight portions (8) of the flanks (7) of the belt teeth (2) extend on the toothed belt (1) from a lower limit of between 14 % and 20 % of the maximum belt tooth addendum (H) to an upper limit of between 46 % and 56 % of the maximum belt tooth addendum (H), when each straight portion is viewed from the belt tooth dedendum line (f).

8. Toothed belt drive according to claim 4, characterised in that the heads (9) of the belt teeth (2) in the profile are each formed by an arc (10), which communicates with the straight portions (8) of the flanks (7) and has a radius (R) of between 60 % and 70 % of the maximum belt tooth addendum (H) and an additional straight portion (12), which lies therebetween and extends in the circumferential direction.

9. Toothed belt drive having a plurality of belt teeth (2), the flanks (7) of the belt teeth (2) substantially compising a straight portion (8), characterised in that the straight portions (8) of the flanks (7) of the belt teeth (2) extend from a lower limit of between 14 % and 20 % of the maximum belt tooth addendum (H) to an upper limit of between 46 % and 56 % of the maximum belt tooth addendum (H), when each straight portion is viewed from the belt tooth dedendum line, and in that the heads (9) of the belt teeth (2) in the profile are each formed by an arc (10), which communicates with the straight portions (8) of the flanks (7) and has a radius (R) of between 60 % and 70 % of the maximum belt tooth addendum (H) and an additional straight portion (12), which lies therebetween and extends in the circumferential direction.

## Revendications

1. Transmission à courroie crantée, composée d'une courroie crantée (1) comportant une pluralité de dents de courroie (2) et de roues dentées (3), avec une pluralité de vides d'entredent (4) se trouvant chaque fois entre deux dents de roue (16), chaque dent de courroie (2) étant conçue pour s'engager dans un vide d'entredent (4), le profil des dents de courroie (3) n'étant pas conjugué au profil des vides d'entredent (4) des roues dentées (3), caractérisée en ce que les centres (M) des arcs de cercle (6) définissant les flancs de roue (5) se situent, de 20 % à 28 % de la valeur (T) de la division, radialement à l'extérieur du cercle de tête de roue (k).

2. Transmission à courroie crantée selon la revendication 1, caractérisée en ce que le profit des dents de courroie (2) diffère du profit conjugué des vides d'entredent (4) des roues dentées (3), de manière que chaque dent de roue (2) arrivant en contact lors de l'entrée de la courroie, vienne, par un point de contact (P) unique, sur le flanc (5) associé d'une dent de roue (16), le point de contact (P) s'établissant au début de l'engagement sur le flanc de courroie (7) se trouvant à une hauteur de dent (h) radiale comprise entre 69 % et 79 % de la hauteur maximale (H) de la dent de courroie, par rapport à la ligne de pied (f) de la courroie crantée.

3. Transmission à courroie crantée selon la revendication 1, caractérisée en ce que les flancs (5) des dents de roue (16) sont constitués d'arcs de cercle dont les centres (M) sont situés sur le cercle de tête de roue dentée (k) à distance de l'axe médian (x) de l'entredent et, de manière connue en soi, comme suivant indiqué dans le EP-PS 0 106 694.

4. Transmission à courroie crantée selon la revendication 1, caractérisée en ce que les flancs (7) des dents de courroie (2) sont constitués essentiellement d'une section rectiligne (8).

5.  Transmission à courroie crantée selon la revendication 4, caractérisée en ce que les deux flancs (7) d'une dent de courroie (9) font un angle de flanc compris entre 14° et 17°.

6.  Transmission à courroie crantée selon la revendication 1, caractérisée en ce qu'au moins l'une de ces courroies crantées (1) est réalisée comme indiqué à la revendication 4.

7.  Transmission à courroie crantée selon la revendication 4, caractérisée en ce que, sur la courroie crantée (1), les sections de droite (8) des flancs (7) des dents de courroie (2) s'étendent, d'une limite inférieure située entre 14 % et 20 % de la hauteur maximale (H) de la dent de courroie, jusqu'à une limite supérieure située entre 46 % et 56 % de la hauteur maximale (H) de la dent de courroie, en observant chaque fois depuis la ligne de pied (f) de la dent de courroie.

8.  Transmission à courroie crantée selon la revendication 4, caractérisée en ce que les têtes (9) des dents de courroie (2) sont constituées en profil chacune par un arc de cercle (10) se raccordant aux sections rectilignes (8) des flancs (7), avec un rayon (R) compris entre 60 % et 70 % de la hauteur maximale (H) de la dent de courroie et une section rectiligne (11) supplémentaire, intercalaire, s'étendant dans la direction périphérique.

9.  Courroie crantée comportant une pluralité de dents de courroie (2), les flancs (7) des dents de courroie (2) étant constituées essentiellement d'une section rectiligne (8), caractérisée en ce que les sections rectilignes (8) des flancs (7) des dents de courroie (2) s'étendent depuis une limite inférieure, entre 14 % et 20 % de la hauteur maximale (H) de la dent de courroie, jusqu'à une limite supérieure, entre 46 % et 56 % de la hauteur maximale (H) de la dent de courroie, chaque fois en observant depuis la ligne de pied de dent de courroie et en ce que les têtes (9) des dents de courroie (2) sont constituées en profil chacune par un arc de cercle (10) se raccordant aux sections rectilignes (8) des flancs (7), avec un rayon (R) compris entre 60 % et 70 % de la hauteur maximale (H) de la dent de courroie et une section rectiligne (11) supplémentaire, s'étendant dans la direction périphérique.

FIG. 1

$R_f$
$R_k$

t
q
s
y
H
T
f

1
20
13
14
15
8
10
11
12
9
2
7
17

8

EP 0 505 919 B1

FIG. 2

FIG. 3

EP 0 505 919 B1

EP 0 505 919 B1

FIG. 4

11

FIG. 5

EP 0 505 919 B1